# EUROPEAN PATENT APPLICATION

(11) **EP 3 176 027 A1**
(43) Date of publication of application: **07.06.2017**
(21) Application number: 15828238.4
(22) Date of filing: 11.06.2015
(51) Int. Cl.: B60N 2/16

(54) **LINK STRUCTURE FOR VEHICLE SEAT**

(30) Priority: 31.07.2014 JP 2014156590
(71) Applicant: Tachi-S Co., Ltd., Akishima-shi, Tokyo 196-8611 (JP)
(72) Inventor: HIRANO Takumi, Akishima-shi Tokyo 196-8611 (JP); HASHIMOTO Satoshi, Akishima-shi Tokyo 196-8611 (JP); TAKAGI Shun, Akishima-shi Tokyo 196-8611 (JP); YAMAMOTO Hiromi, Akishima-shi Tokyo 196-8611 (JP)
(74) Representative: Burton, Nick
(86) International application number: PCT/JP2015/066876
(87) International publication number: WO 2016/017295

(57) **Abstract**

[Purpose] To provide a link structure in a motor vehicle seat, which realizes a simplified pivotal connection of a link element therein and also ensures that rotation of the link element is maintained so smooth and stable as to avoid rattling and wobbling of the link element.

[Means for Achieving the Purpose] In a link structure comprising a movable portion (such as a seat cushion frame D) and a base portion (such as an upper rail member D) retained stationary relative to the movable portion, wherein the movable portion is movable relative to the base portion and connected therewith via a link element 10, there is provided a pivotal connection portion E to which the link element 10 is at a hole portion 10a thereof pivotally connected. This pivotal connection portion E basically includes: a cylindrical region 11 a-1 integral with one or each of the base and movable portions; and an outwardly-divergent opening end region 11a-2 formed in a free end of the cylindrical region so as to become large radially in an outward direction. The hole portion 10a of the link element 10 is rotatably supported on and about the cylindrical region 11a-1, while a lower end portion 10eL of the link element is supportively sandwiched between the outwardly-divergent opening end region 11a-2 and one or each of the base and movable portions, so that the link element 10 is ratable relative to the cylindrical region 11a-1 forming a center of rotation of the link element. With this arrangement, the pivotal connection of the link element can be effected in an extremely simplified manner, and further, in assembly, merely pressing and deforming the cylindrical region 11a-1 preformed in the base portion results in a completely uniform formation of the outwardly-divergent opening end region 11a-2, such that a circular foot base 11c of that outwardly-divergent opening end region is fully contacted with an entirety of an edge 10aE of the aforesaid hole portion 10a, thus establishing a full and uniform circumferential contact therebetween. Accordingly, the pivotal connection of the link element 10 to the base portion side can be extremely stable, so that the link element 10 is smoothly rotatable about the cylindrical region 11a-1, without any rattling and wobbling of the link element there.

## Description

### Technical Field

The present invention relates to a structure of a link used in a motor vehicle seat, wherein the link may for example be used as a part of a mechanism operable for vertical movement of a seat cushion of the seat.

### Background Art

The link structure in the aforementioned technical field is disclosed in a Japanese Laid-Open Patent Publication No. 2008-87554, for instance. A motor vehicle seat described in this literature includes a seat slide rail comprising a lower rail member fixed on a floor of automobile and an upper rail member slidably engaged with the lower rail member. Those lower and upper rail members are operatively connected with each other by way of link elements. According to this prior art, a pair of front links and a pair of rear links are connected and arranged between the lower and upper rail members in a parallel relationship, thus constituting a parallel linkage therebetween. All those links are at their end portions rotatably connected with the upper rail member. In this prior art, a rivet is employed as an axis or shaft about which the end portion of each of the links is rotatably supported, the rivet being provided in the upper rail member.

### Prior-Art Literature

### Patent-related document

Patent-related Document 1: Japanese Laid-Open Patent Publication No. 2008-87554,

### Summary of the Invention

### Problems to be Solved by the Present Invention

Again, the above-stated conventional link structure of motor vehicle seat is such that each of the links is pivotally connected, via the rivet, with the upper rail member. In assembly, as done in normal riveting, a free end portion of the rivet, penetrating through the link, is pressed and collapsed against a surface of the upper rail member to form a flattened end portion in the rivet, so that the link is supportively sandwiched between that flattened end portion and the surface of the upper rail member, thereby preventing removal of the link from the upper rail member. However, with regard to the flattened end portion of the rivet, it is required to carefully adjust a degree of contact of that flattened end portion with the surface of the upper rail member in order to allow smooth rotation of the link about the rivet. In other words, when the contact of the rivet's flattened end portion with the upper rail member's surface is too close and strong, the link can hardly be rotated, whereas on the other hand, when the degree of contact therebetween is insufficiently small, the link is rattled and wobbled, which has been a problem yet to be solved in this technical field. Consequently, assembly of this linkage inevitably involves time-consuming and inefficient steps as such.

### Means for Solving the Problem

It is a purpose of the present invention to provide an improved link structure in a motor vehicle seat, which realizes an extremely simplified pivotal connection of a link element and also ensures that rotation of the link element is so smooth and stable as to avoid its rattling and wobbling.

In accomplishment of such purpose, according to the present invention, there is provided a link structure in a motor vehicle seat, which includes a movable portion and a base portion retained stationary relative to the movable portion, wherein the movable portion is movable relative to the base portion and connected therewith via a link element,
the link structure being characterized in that:
the link element has a hole portion formed in an end portion thereof;
a pivotal connection portion is provided, at which the link element is at the hole portion thereof pivotally connected with one or each of the base and movable portions;
the pivotal connection portion includes: a cylindrical region; and an outwardly-divergent opening end region formed in a free end of the cylindrical region, the outwardly-divergent opening end region being so configured to become large radially in an outward direction from the cylindrical region;
the cylindrical region is formed integrally in one or each of the base and movable portions; and
the hole portion of the link element is rotatably supported on and about the cylindrical region, while the end portion of the link element is supportively sandwiched between the outwardly-divergent opening end region and one or each of the base and movable portions, so that the link element is ratable relative to the cylindrical region forming a center of rotation of the link element.

From the above-described structure of the present invention, it is to be appreciated that a circular foot base of the outwardly-divergent opening end region, naturally defined between that particular opening end region and a plain surface of the cylindrical region, is in a full contact with and along an entire circular edge of the hole portion of the link element, thereby establishing a full and uniform circumferential contact therebetween. Thus, in contrast to the previously-stated link pivotal connection using rivet, the contact between the link element's hole portion and the outwardly-divergent opening end region is extremely small and narrow and also attains a completely full and uniform contact that precludes noncontacted spot therebetween. Further, such narrow and full contact characteristics achieves extremely stable connection of the link element to one or each of the base and movable portions and therefore ensures that rotation of the link element about the cylindrical region is maintained smooth and stable, without the link element being rattled and wobbled there.

As one exemplary aspect of the present invention, the base portion may comprise a floor of motor vehicle and the movable portion may comprise a seat cushion frame provided in a seat cushion of the motor vehicle seat. Or alternatively, the base portion may comprise a seat cushion frame provided in the seat cushion and the movable portion may comprise a footrest device.

In the present invention, essentially, formation of the aforesaid cylindrical region and outwardly-divergent opening end region in the pivotal connection portion may be effected through the steps of: preforming a cylindrical protruding portion in one or each of the base and movable portions by a burring method; mounting the link element to the one or each of the base and movable portions by inserting the cylindrical protruding portion in and through the hole portion of the link element; and thereafter defining the cylindrical region and the outwardly-divergent opening end region in the cylindrical protruding portion. And further, the aforesaid last step of defining the cylindrical region and outwardly-divergent opening end region in the cylindrical protruding portion essentially requires using a punch having a conical end portion and involves pressing that conical end portion of the punch forcibly against an outer opening end of the cylindrical protruding portion so as to define those cylindrical region and outwardly-divergent opening end region in the cylindrical protruding portion. Thus, according to this embodiment, all actions to be done is merely pressing a punch against the cylindrical protruding portion as stated above, which instantaneously forms the outwardly-divergent or truncated-conical opening end region in the cylindrical protruding portion, in outwardly and radially uniform manner. Also concurrently, the circular foot base of the thus-formed opening end region is precisely contacted with and along an entire circular edge of the connecting hole of the link element, thus establishing a full contact between the circular foot base and circular edge in a uniform manner that precludes noncontacted spot therebetween. Accordingly, there is no need for the troublesome adjustment of contact found in the conventional link pivotal connection by rivet in respect to the upper rail member.

As another exemplary aspect of the present invention, the aforesaid outwardly-divergent opening end region may be provided as a first outwardly-divergent opening end region, and the aforesaid pivotal connection portion may further include a second outwardly-divergent opening end region which is formed in the link element so as to circumscribe the hole portion of the link element and extend outwardly therefrom in a radially enlarged manner. An inner surface of the second outwardly-divergent opening end region is slidably contacted on and about an outer surface of the first outwardly-divergent opening end region. In that embodiment, such additional formation of the second outwardly-divergent opening end region highly increases an area of its contact with the first outwardly-divergent opening end region, thereby ensuring that rattling and wobbling of the link element is completely prevented, which is even true during rotation of the link element about the cylindrical region.

As still another exemplary aspect of the present invention, the aforesaid pivotal connection portion may further include a turned-over circular flange portion formed in a free end of the aforesaid cylindrical region, such turned-over circular flange portion having a curved cross-section and being so configured to become large radially therefrom in relation to a center of the hole portion of the link element and be turned over toward the link element in relation to the center. Also, a circular distal end of this turned-over circular flange portion be slidably contacted on a surface of the link element, and the hole portion of the link element be rotatably supported on and about the cylindrical region, with the end portion of the link element being supportively sandwiched between the aforesaid circular distal end and one or each of the base and movable portions, so that the link element is ratable relative to the cylindrical region forming a center of rotation of the link element. Accordingly, in that embodiment, an entirety of the circular distal end of the turned-over circular flange portion is fully, slidably contacted on the outer surface 10f of the link element in a uniform manner without noncontacted spot therebetween, which ensures that the link element is always stably supported by that circular distal end against lateral dislocation, which is even true during rotation of the link element about the cylindrical region.

Moreover, a bush made of a synthetic resin material may be arranged in each of the above-described embodiments of the invention so as to not only reside between the link element and one or each of the base and movable portions, but also reside between the pivotal connection portion and the hole portion of the link element. This bush arrangement may effectively facilitate the ease and smoothness of rotation of the link element in the pivotal connection portion.

### Effects of the Invention

Accordingly, the present invention realizes an extremely simplified pivotal connection of the link element between the movable and base portions in the motor vehicle seat, and also ensures that rotation of the link element at one or each of the movable and base portions is maintained smooth and stable, without any rattling and wobbling of the link element there.

### Brief Description of the Drawings

- [Fig. 1] :: A schematic perspective view which roughly shows an example where a principal part of a link structure of the present invention is applied to a seat cushion frame of a motor vehicle seat and a slide rail device.
- [Fig. 2] :: A partially enlarged view corresponding to a portion designated by II in the Fig. 1, which enlarges and depicts a principal part of a first embodiment of link structure of the present invention.
- [Fig. 3] :: A fragmentary sectional view showing the principal part of the first embodiment of link structure.
- [Fig. 4] :: A partly-broken exploded perspective view showing the principal part of the first embodiment of link structure.
- [Fig. 5] :: A fragmentary sectional view showing use of a punch to form the principal part of the first embodiment of link structure.
- [Fig. 6] :: A fragmentary sectional view showing the resulting principal part of the first embodiment of link structure, which has been formed by the punch.
- [Fig. 7] :: A partly-broken exploded perspective view showing a principal part of a second embodiment of link structure of the present invention, which also shows use of a bush made of synthetic resin material in the principal part by way of example.
- [Fig. 8] :: A fragmentary sectional view showing use of a punch to form the principal part of the second embodiment of link structure
- [Fig. 9] :: A fragmentary sectional view showing the resulting principal part of the second embodiment of link structure, which has been formed by the punch.
- [Fig. 10] :: A fragmentary sectional view showing a principal part of a third embodiment of link structure in accordance with the present invention, which indicates use of a punch to form the principal part.
- [Fig. 11] :: A fragmentary sectional view showing the resulting principal part of the third embodiment of link structure, which has been formed by the punch.
- [Fig. 12] :: A partly-broken front view showing the principal part of the third embodiment of link structure.
- [Fig. 13] :: A partly-broken exploded perspective view showing a link element used in a fourth embodiment of link structure of the present invention.
- [Fig. 14] :: A fragmentary sectional view showing use of a punch in constructing the fourth embodiment of link structure.
- [Fig. 15] :: A fragmentary sectional view showing a resulting principal part of the fourth embodiment of link structure, which has been formed by the punch.
- [Fig. 16]:: A partly-broken perspective view showing the principal part of the said fourth embodiment of link structure.
- [Fig. 17] :: A fragmentary sectional view illustrating a fifth embodiment of the present invention, in which a bush made of synthetic resin material is used in the principal part of the preceding fourth embodiment by way of example.
- [Fig. 18] :: A partly-broken schematic perspective view roughly illustrating a sixth embodiment of the present invention, in which the link structure of the invention is applied to connecting portions that connects a footrest device and a seat cushion frame of motor vehicle seat, by way of example.

### Mode for Carrying Out the Invention

Hereinafter, with reference to the annexed drawings, a description will be made of embodiments of a link structure in accordance with the present invention, and in particular, several preferred embodiments of link structure as applied to a motor vehicle seat will be described in details.

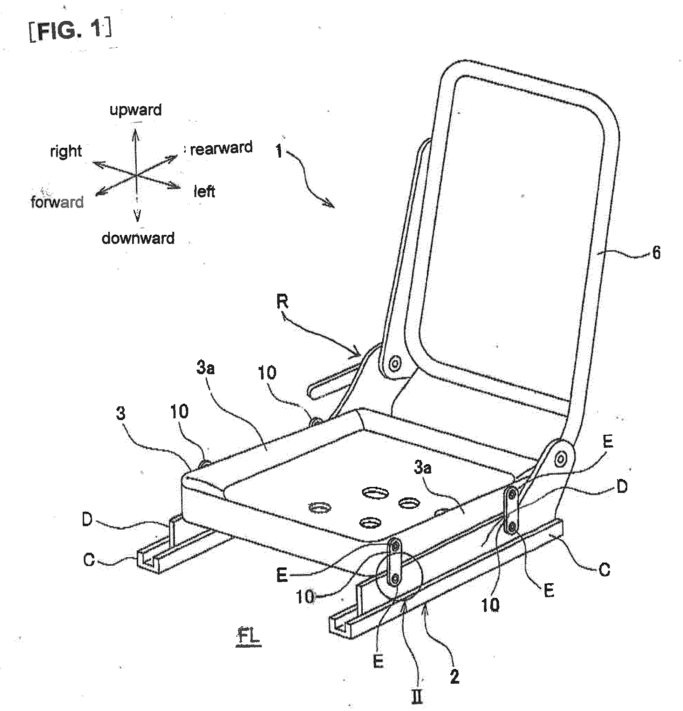

As shown in Fig. 1, a motor vehicle seat 1 is comprised of: a seat cushion frame 3 to be provided in a seat cushion of the seat; a seat back frame 6 to be provided in a seat back of the seat, the seat back frame 6 being forwardly inclinable relative to the seat cushion frame 3; a reclining mechanism R for permitting inclination of the seat back relative to the seat cushion; and an elevation mechanism (not shown) for permitting vertical movement of the seat cushion. The seat cushion frame 3 is equipped with a slide rail device 2 for allowing forward and rearward movement of the seat cushion frame therealong, the slide rail device being fixed on a floor of motor car FL.

The slide rail device 2 includes a pair of lower rail members C and C fixed on the floor FL, and a pair of upper rail members D and D which are slidably engaged with the pair of lower rails members C and C, respectively. In particular, the lower rail members C and C are connected, via four link elements 10, with the seat cushion frame 3. Hence, it is observed that a pair of front and rear link elements 10 and 10 is interposed between the right upper frame D and a right lateral surface region 3a of the seat cushion frame, the right lateral surface region 3a corresponding to a right lateral wall region of the seat cushion, whereas the other pair of front and rear link elements 10 and 10 is interposed between the left upper frame D and a left lateral surface region 3a of the seat cushion frame, the left lateral surface region 3a corresponding to a right lateral wall region of the seat cushion. Those paired front and rear link elements are both simultaneously movable, while maintaining a parallel relation therebetween, thus constituting a parallel linkage known in the art.

In accordance with the present invention, a link pivotal connection portion is provided, as denoted by designation E in Fig. 1. This link pivotal connection portion E is a conceptual portion intended to roughly indicate a pivotal connection point at which each of the aforesaid link elements is pivotally connected between the upper and lower rail members. Namely, it will be generally understood that, at that pivotal connection portion E, an upper end portion of each of the link elements 10 is pivotally, rotatably connected with the lateral surface region 3a of a side frame portion 3 of the seat cushion frame 3, whereas at that pivotal connection E, a lower end portion of each of the link elements 10 is pivotally, rotatably connected with the upper rail member D.

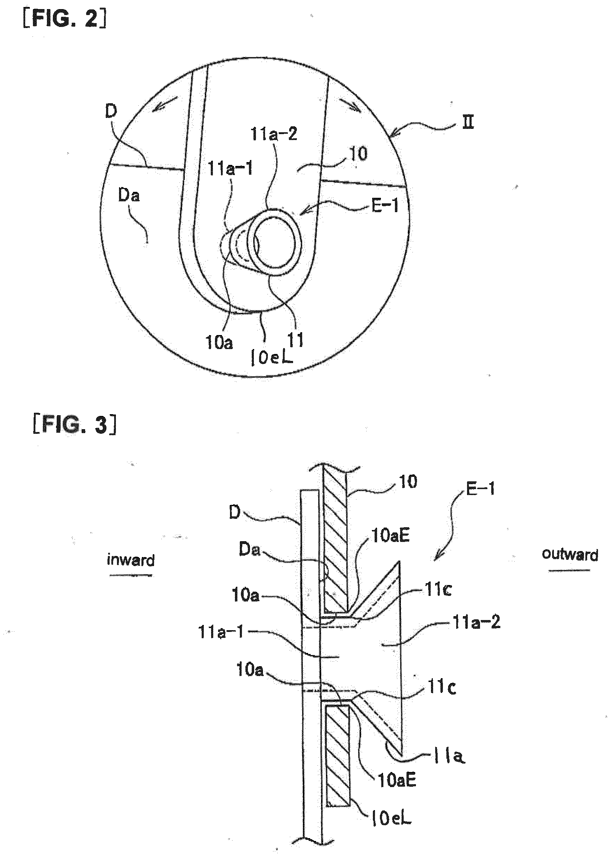

Now, at first, the link pivotal connection portion E will be described briefly in a generic way. In this regard, for the sake of simplicity, a description will be made only as to the link pivotal connection portion E which is encircled by a circle denoted by numeral 11 in Fig. 1 and depicted in Fig. 2.

From Figs. 2 to 5, it can be generally understood that the link pivotal connection portion E in the present invention is basically constructed as bellow:
a) In the upper rail member D, there is formed a protruding portion having: a cylindrical region 11a-1; and an outwardly-divergent opening end region 11a-2 (or bell mouthed opening end region) which becomes large radially toward the outside thereof. As will be elaborated later, those cylindrical region and outwardly-divergent opening end region are formed by a process wherein a punch having a conical end portion is employed and the conical end portion of the punch is forcibly pressed against a preformed cylindrical protruding portion that has been formed in the upper rail member D.
b) The cylindrical region 11a-1 A is slidably supported in a circular connecting hole 10a formed in a lower end portion 10eL of the link element 10, thereby permitting rotation of the link element 10 relative to the cylindrical region 11a-1. Further, the lower end portion 10eL of the link element is supportively sandwiched between the upper rail member D and the aforesaid outwardly-divergent opening end region 11a-2.

Due to the structure briefly stated above, it is to be appreciated that, by simply pressing the aforesaid conical end portion of the punch against the aforesaid cylindrical protruding portion preformed in the upper rail member, the aforesaid outwardly-divergent opening end region is formed uniformly and equally in outward and radial directions, and that a circular foot base (at 11c in Fig. 3) of so uniformly formed outwardly-divergent opening end region is fully, precisely contacted with and along an entire circular edge of the aforesaid connecting hole of the link element, thus establishing a circumferential full contact between that circular foot base and the circular edge of the connecting hole in a uniform manner precluding noncontacted spot therebetween. In that way, an optimal stable pivotal connection of the link element 10 to the upper rail member D is achievable, which not only assures stable rotation of the link element about the aforesaid cylindrical region, without any rattling and wobbling of the link element occurring there, but also completely prevents removal of the link element from the upper rail member D.

The above-described link structure of the present invention is superior to the conventional link connection using a rivet. For, according to the conventional riveting method, a free end portion of the rivet is pressed and deformed into a radially-extending flattened end portion which contacts a link element, but an area of contact of such flattened end portion with the link element is so large as to increase friction therebetween, thus requiring adjustments to determine a proper tolerable degree of contact of the flattened end portion with the link element. According to the present invention, however, all actions to be done is merely pressing a punch against the cylindrical protruding portion as stated above, which instantaneously forms the outwardly-divergent or truncated-conical opening end region in the cylindrical protruding portion, in outwardly and radially uniform manner. Also concurrently, the circular foot base of the thus-formed opening end region is precisely contacted with and along an entire circular edge of the connecting hole of the link element, thus establishing a full and narrow contact between the circular foot base and circular edge. This full and narrow contact indeed provides an extremely small area of contact between the link element and the outwardly-divergent opening end region, thus lessening a coefficient of friction therebetween, while maintaining the contact between the circular foot base and circular edge in a uniform manner precluding noncontacted spot therebetween, in contrast to the conventional riveting. Hence, according to the present invention, there is no need for the adjustment of contact found in the previously-mentioned conventional riveting in respect to the upper rail member.

Now, based on the foregoing technical concept and gist encompassed by the present invention, a specific description will be made of each of several exemplary embodiments given below, with reference to Figs. 2 to 18.

Figs. 2 to 6 show a first exemplary embodiment of the present invention. For the sake of simplicity, a description will be given only with regard to the link pivotal connection portion E provided between the upper rail member D and the lower end portion 10eL of the link element. In other words, Fig. 2 shows a first embodiment of the link pivotal connection portion E, which is generally indicated by designation E-1. This link pivotal connection portion E-1, as a first exemplary embodiment of the present invention, may be formed through the steps described below.

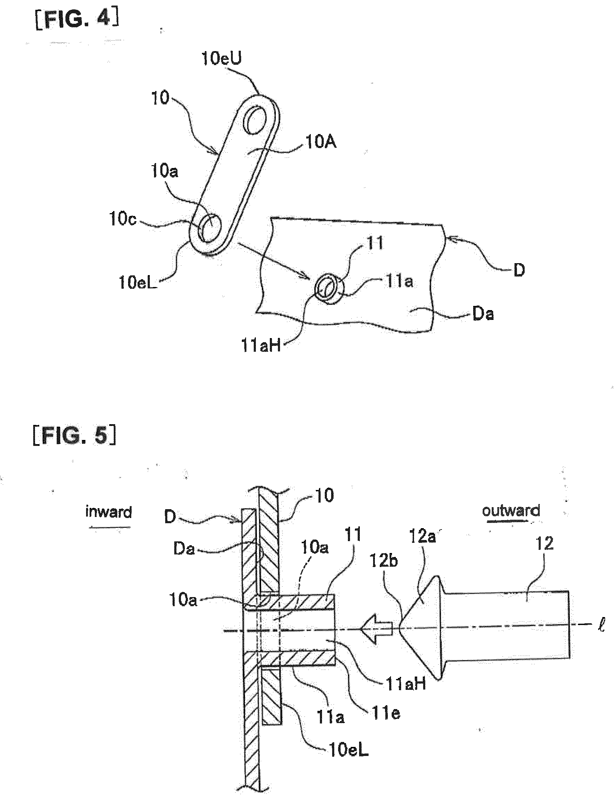

As shown in Fig. 4, by way of example, a cylindrical protruding portion 11 is first preformed in the upper rail member D formed of a metallic material so as to protrude from an outer wall surface Da of the upper rail member D, by a particular burring process designed to form that cylindrical protruding portion. The resulting cylindrical protruding portion 11 therefore has: a main body 11 a; and a through-bore 11aH which is defined in the main body 11 a and passes through the upper rail member D.

Subsequent to the foregoing preformation, the cylindrical protruding portion 11 is inserted in the circular connecting hole 10a of the link element 10, so that the lower end portion 10eL of the link element is rotatably connected to that cylindrical protruding portion 11, while being in slidable contact on the outer surface Da of the upper rail member D, as shown in Fig. 5.

Next, a punch 12 having a conical end portion 12a (See Fig. 5) is provided. As shown in Fig. 5, the conical end portion of the punch 12 is located and inserted in the cylindrical protruding portion 11 which is preformed in the upper rail member D and has been connected with the link element beforehand, as stated above. Here, it is important that a center 12b of the conical end portion 12a of the punch should be located on a central axis ℓ of the cylindrical protruding portion 11, as shown. With this arrangement, it is to be appreciated that the conical end portion 12a of the punch is fully contacted with an entirety of a circular distal end 11e of the cylindrical protruding portion 11 in a uniform manner precluding any noncontacted spot therebetween, although not clearly shown.

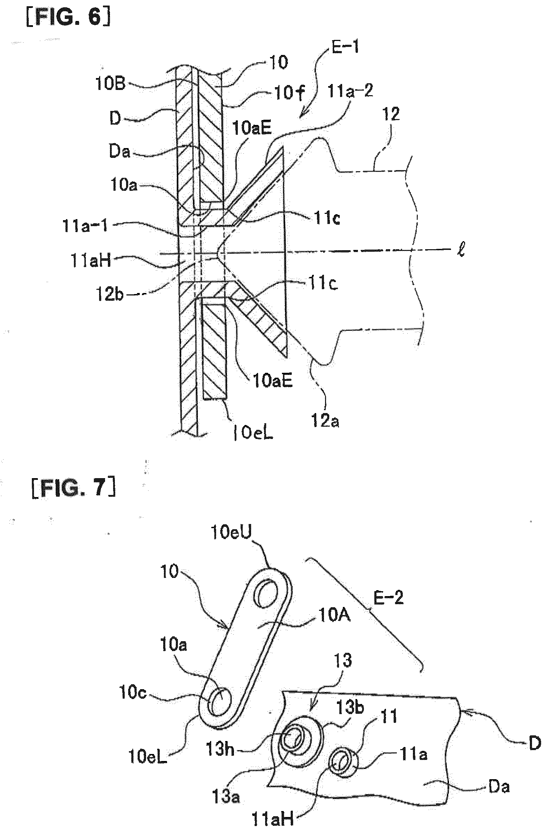

Following the foregoing steps, the punch 12 is forcibly, pressingly inserted into the cylindrical protruding portion 11 (See Fig. 5), and then, referring to Fig. 6, it can be seen that, as the punch 12 advances into that cylindrical protruding portion towards the upper rail member D, a free end portion of the main body 11a of the cylindrical protruding portion 11 is deformed and extended radially due to its metallic ductility, with the result that so deformed free end portion is transformed into an outwardly-divergent opening end region 11a-2 (or bellmouthed opening end region). Then, with further continued forcible insertion of the punch into the cylindrical protruding portion as such, the outwardly-divergent opening end region 11a-2 becomes progressively large in outward and radial directions, during which, it appears as if the circular foot base at 11c of that outwardly-divergent opening end region would concurrently move to and approach the connecting hole 10a. As a consequence thereof, so radially diverged opening end region 11a-2 is, at the circular foot base 11c thereof, contacted with the circular edge 10aE of the connecting hole 10a, whereupon the movement of the punch 12 is thereby blocked and stopped, so that a worker ceases the forcible insertion of the punch at that time. Accordingly, as seen in Fig. 3, in the main body 11a of the cylindrical protruding portion 11, there are defined: a predetermined size and shape of the outwardly-divergent opening end region 11a-2; and a predetermined cylindrical region 11a-1 which is supported rotatably in the connecting hole 10a of the link element. In other words, the outwardly-divergent opening end region 11a-2 opens outwardly in a uniform truncated-conical shape in relation to a central axis of the cylindrical region 11a-1. This constitutes the present exemplary embodiment of link pivotal connection portion which is generally indicated by E-1. Therefore, according to the present embodiment E-1, as shown in Fig. 2, the lower end portion 10eL of the link element is rotatably sandwiched and supported between the upper rail member D and the outwardly-divergent opening end region 11a-2 so as to be ratatable about the cylindrical region 11a-1 forwardly and rearwardly as indicated by the arrow in the Fig. 2.

In this first embodiment of link pivotal connection portion E-1, the punch 12 shown in Fig. 5 may be used, and all actions to be done is simply pressing the conical end portion 12a of that punch 12 against the cylindrical protruding portion 11 in the same manner as described previously, so that a uniformly outwardly-diverged opening end region 11a-2 is formed therein (See Fig. 3). This simple operation results in the circular foot base 11c of the outwardly-diverged opening end region 11a-2 being fully, slidably contacted on and along an entire edge of the connecting hole 10aE, whereupon a slidable full contact is established between the circular foot base 11c and circular connecting hole 10aE along the entire circumferences thereof in a uniform way precluding noncontacted spot therebetween. Accordingly, the pivotal connection of the lower end portion 10eL of the link element 10 to the upper rail member D is so extremely stable as to ensure that the link element 10 is smoothly rotated about the cylindrical region 11 a-1 and prevented from being rattled and wobbled there. Further, the outwardly-diverged opening end region 11a-2 resides extremely close to the lower end portion 10eL of the link element 10 and is also extremely large in diamter than the connecting hole 10a of the link element 10, thereby completely preventing removal of the link element's lower end portion 10eL from the upper rail member D.

Furthermore, the present first embodiment requires none of the adjustments required in the previously-stated conventional link connection using rivet. In this prior art, a free end portion of the rivet is pressed and deformed into a radially flattened end portion which contacts a link element, but an area of contact of that radially flattened end portion with the link element is so large as to increase friction therebetween, thus requiring adjustments to determine a proper tolerable degree of contact of the radially flattened end portion with the link element. But, according to this first embodiment of the present invention, all actions to be done is merely pressing the punch against the cylindrical protruding portion as stated above, which instantaneously forms the outwardly-divergent opening end region 11a-2 in the cylindrical protruding portion and also simultaneously forms the aforesaid circular foot base 11c. Further, the circular foot base 11c is fully, slidably contacted with and along an entire circular edge of the circular connecting hole 10aE of the link element, whereupon a full and slidable contact is established between the circular foot base 11 c and circular connecting hole 10aE along the entire circumferences thereof, in a manner precluding noncontacted spot therebetween Moreover, an area of the contact between those two portions 11c and 10aE is extremely small and narrow, like a thin circular line, hence establishing a minuscule circular contact therebetween. Such a minuscule circular contact area is far extremely smaller than a contact area of the aforesaid rivet's flattened end portion which contacts link element. Therefore, in the present invention, simply pressing the punch 12 against the cylindrical protruding portion automatically results in both circular foot base 11c and circular connecting hole 10aE being precisely and fully contacted with each other along the entire circumferences thereof, which looks like a uniform contact on a thin circular line as stated above, thereby extraordinarily lessening a coefficient of friction therebetween, which assures smooth and stable slidability of the circular connection hole 10aE on and along the circular foot base 11c. This in no way requires the necessity of adjustment of contact between those potions 11c and 10eA as opposed to the aforementioned prior art requiring the troublesome adjustment of contact of rivet with link element, and therefore in the present invention, a rapid and easy pivotal connection of the link element to the upper rail member can be realized.

Figs. 7 to 9 show a second embodiment of the present invention. Namely, a second embodiment of the previously defined link embodiment E is shown in these Figures and indicated by designation E-2. This second embodiment suggests use of a bush 13 made of a synthetic resin material (or a cylindrical slippery spacer with slidable outer surface) in the preceding first embodiment. Except for that bush 13, the present second embodiment is basically identical in elements used and structure to the first embodiment. All like designations to be used hereinafter correspond to all like designations given in the first embodiment, and any further description is omitted with regard to all the parts and elements commonly used in both first and second embodiments, for the sake of simplicity.

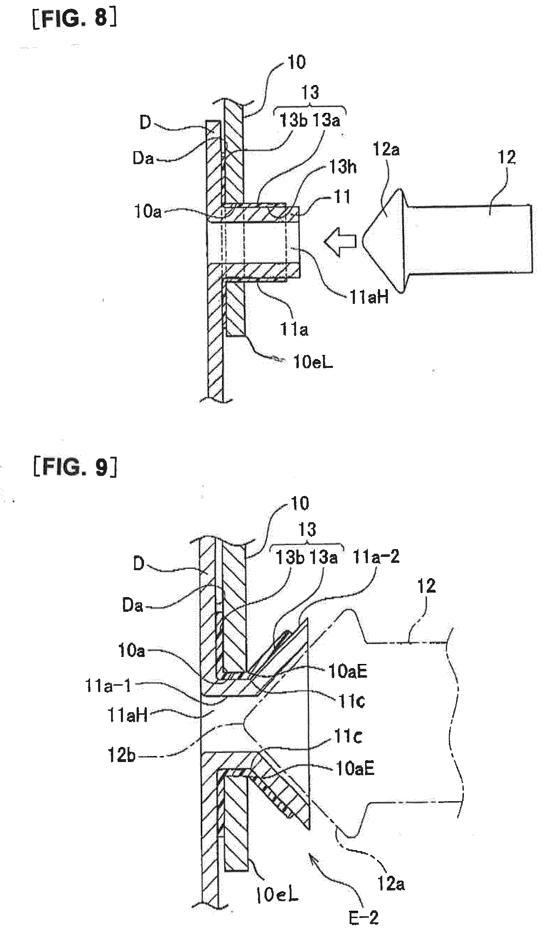

The bush 13 provided in this second embodiment is depicted in Fig. 7 as comprising a cylindrical portion 13a and a flange portion 13b. Designation 13h denotes a through-hole formed in the bush 13 so as to penetrate the same. In assembly, the bush 13 is first securely mounted to the cylindrical protruding portion 11 of the upper rail member D, by causing the cylindrical body 11a of that cylindrical protruding portion 11 to insert in and through the through-hole 13h of the bush 13, until the flange portion 13b of the bush 13 contacts an outer surface Da of the upper rail member D. In this regard, to firmly secure the cylindrical portion 13a of the bush 13 on and about the cylindrical protruding portion 11, an adhesive may be applied therebetween. Or alternatively, for that purpose, an inner diameter of the bush through-hole 13h may be made slightly smaller than an outer diameter of the cylindrical region 11a, so that due to the elastic repulsive property of the synthetic resin bush 13, an inner surface of the through-hole 13h of that bush 13 will strongly contact an outer surface of the cylindrical region 11a, thereby achieving a firm connection of the bush to that particular cylindrical region 11a. In either of those firm securing ways, the cylindrical portion 13a of the bush 13 may be fixedly attached to the cylindrical region 11a of the cylindrical protruding portion 11, as shown in Fig. 8, so that the bush 13 itself is retained immovable and non-rotatable with reference to the upper rail member's outer surface Da.

Subsequently, the lower end portion 10eL of the link element is brought to the cylindrical protruding portion 11 on which the bush 13 has been fixedly secured as stated above, and then both two cylindrical portions 11a and 13a respectively of the cylindrical protruding portion and bush are inserted through the connecting hole 10a formed in the link element's lower end portion 10eL, so that the bush 13 is interposed between the link element's lower end portion 10eL and the upper rail member's outer surface Da as well as between the cylindrical region 11 a and the connecting hole 10a, as shown in Fig. 8.

Next, the conical end portion 12a of the punch 12 is forcibly pressed against the cylindrical protruding portion 11 to form an outwardly-divergent opening end region 11a-2 therein, which concurrently causes the cylindrical region 13a of the bush 13 to deform and extend radially into an outwardly-divergent or bellmouthed shape in conformity with that outwardly-divergent opening end region 11a-2, whereby a predetermined area of the latter 11a-2 is entirely covered with the thus-formed bell mouthed portion of the bush, as seen in Fig. 9. Hence, it is observed that the bush 13 resides in the following points: a point between the link element's lower end portion 10eL and the upper rail member's outer surface Da; a point between the link element's connecting hole 10a and the cylindrical region 11a-1 of the cylindrical protruding portion 11; and a point between the circular foot base 11c of the truncated-conical opening end region 11a-2 and a circular edge 10aE of the connecting hole 10a. Such interposition of the bush 13 effectively permits smooth rotation of the link element 10 relative to the cylindrical region 11a-1.

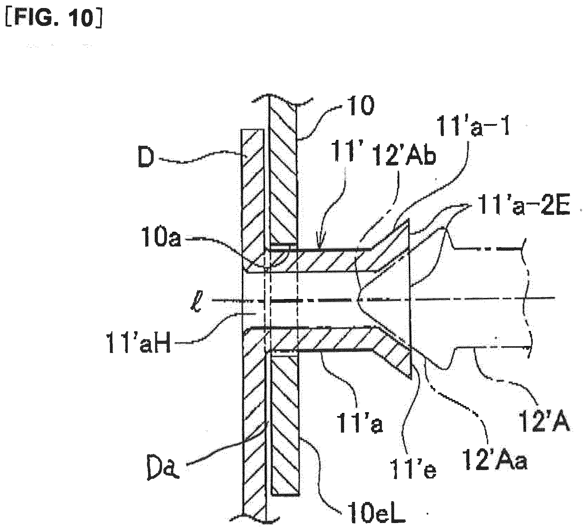

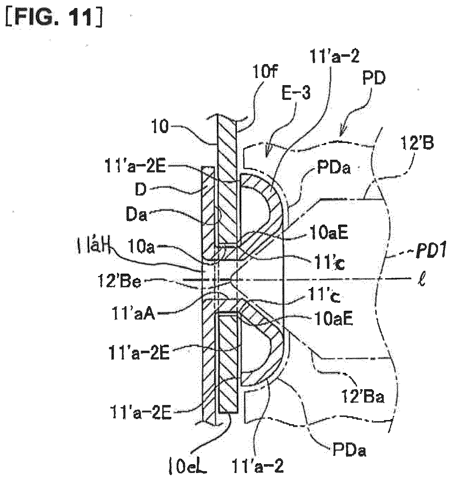

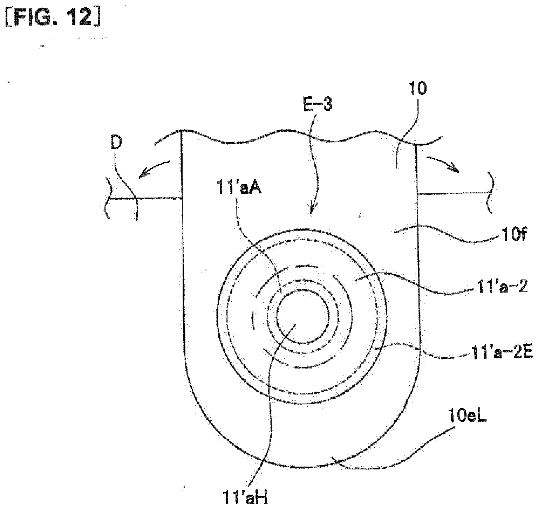

Figs. 10 to 12 show a third exemplary embodiment of the present invention. In other words, a third exemplary embodiment of the previously-defined link embodiment E is shown in these Figures and generally indicated by the designation E-3 (See Figs. 11 and 12). This third embodiment is based on and similar to the preceding first embodiment in terms of major constituent elements used, but different therefrom as to formation of a principal part. Namely, the illustrated third embodiment suggests preformation of a cylindrical protruding portion 11' in the upper rail member and also suggests utilizing: a first punch 12'A; and a press-working device PD equipped with a second punch 12'B, which are designed to initially form the aforesaid outwardly-divergent opening end region as done in the first embodiment and further evert or turn over such initially formed region in a direction rearwardly thereof to form a turned-over circular flange portion 11'a-2 in the cylindrical protruding portion 11', wherein the said turned-over circular flange portion 11'a-2 has a curved or "U" shape in cross-section, with a circular distal end thereof oriented to the link element 10. It is noted that all like designations to be used hereinafter correspond to all like designations given in the first embodiment, and any further description is omitted with regard to all the parts and elements commonly used in both first and third embodiments, for the sake of simplicity.

Referring to Fig. 10, it is understood that the cylindrical protruding portion 11' is preformed in the upper rail member D by a proper burring process. In this respect, the length and diameter of the cylindrical protruding portion 11' should be sufficient to permit forming a required shape of the aforesaid turned-over circular flange portion 11'a-2 which will be described later in details. As observed from the Fig. 10, the cylindrical protruding portion 11' includes: a cylindrical main body 11'a; and a through-hole 11'aH formed in and through the cylindrical main body 11'a, the through-hole 11'aH further penetrating the upper rail member D.

Preliminarily, the foregoing preformed cylindrical protruding portion 11' is inserted in the circular connecting hole 10a of the link element 10, so that the lower end portion 10eL of the link element is rotatably attached to that cylindrical protruding portion 11, while being slidably contacted on the outer surface Da of the upper rail member D, as shown in Figs. 10 and 11.

Then, at a first stage of assembly of this embodiment, the first punch 12' A having a conical end portion 12'Aa, shown in Fig. 10, is provided and brought to the upper rail member D to which the link element 10 has been attached as stated above. As can be seen in Fig. 10, the conical end portion 12'Aa of the first punch 12'A is directed to and pressingly fitted in the cylindrical protruding portion 11' on which the link element has been rotatably mounted. Here, a center (12'Ab) of the first punch's conical end portion 12'Aa is just located on a central axis ℓ of the cylindrical protruding portion 11'. With this coaxial arrangement, such conical end portion 12'Aa is precisely located at a center of the cylindrical protruding portion 11' and therefore fully contacted with and along an entirety of circular distal end 11'e of the cylindrical protruding portion 11' in a completely uniform manner preculding any noncontacted spot between the conical end portion 12'Aa and the circular distal end 11'. Next, under such state, as in the Fig. 10, the first punch 12'A is forcibly pressed against that cylindrical protruding portion towards the upper rail member D, such that a predetermined area of the free end portion of the cylindrical protruding portion 11' is deformed uniformly in outward direction, while being extended uniformly in radial direction, due to its metallic ductility, whereby a predetermined outwardly-divergent opening end region 11'a-1 is defined in the cylindrical protruding portion 11' in a uniformly diverging configuration that becomes large uniformly and equally outwards in relation to the center thereof.

Subsequently, at a second stage, provided is a press-working device PD equipped with a second punch 12'B, which is depicted in Fig. 11 to be constructed such that the second punch 12'B is disposed centrally thereof, with a whole proper of the device PD so arranged to surround that second punch 12'B, and that a circular cavity PDa of a curved or substantially U-shaped cross-section is defined in the device PD so as to surround the second punch 12'B positioned at a center of that circular cavity PDa. Now, the press-working device PD is operated to first cause the conical end portion 12'Ba of the second punch 12'B to fit in and contact the aforesaid outwardly-divergent opening end region 11'a-1 that has been formed in the cylindrical protruding portion 11'. Thereafter, with continued operation of the device PD, the conical end portion 12'Ba is forcibly pressed against the outwardly-divergent opening end region 11'a-1 , with a center (12'Be) of the conical end portion 12'Ba being maintained to be precisely located on the central axis ℓ of the cylindrical protruding portion 11'. As a result thereof, the outwardly-divergent opening end region 11'a-1 (See Fig. 10) is further uniformly extended outwardly, while being uniformly turned over, in relation to the hole portion 11'a thereof, due to its metallic ductility. At this moment, so turned-over opening end region 11'a-1 comes to contact with a curved surface of the circular cavity PDa of the press-working device PD, and then, with further continued operation of the press-working device, that particular opening end region 11'a-1 slides on and along the curved surface of the circular cavity PDa and is thereby further turned over uniformly and equally relative to the hole proton 11'a, so that a whole of circular distal end 11'a-2E of the thus-turned-over end region 11'a-1 is evenly, equally oriented to the outer surface 10f of the link element 10 so as to provide a uniform flat circular surface that may fully contact that outer surface 10f. Consequently, as can be seen from Figs. 11 and 12, there is formed a turned-over circular flange portion 11'a-2 which in part assumes a curved or substantially "U" shape in cross-section as illustrated, such turned-over circular flange portion 11'a-2 as a whole extending uniformly in radial direction from the hole portion 11'aH and being turned over uniformly therefrom toward the link element 10. And also concurrently, in a foot of that turned-over circular flange portion 11'a-2, there is defined a circular foot base 11'c (i.e. a circular neck portion defined between the turned-over circular flange portion and the plain wall of the cylindrical protruding portion). In this manner of forming process, the link pivotal connection portion E-3 of the third embodiment is formed, as depicted in Figs. 11 and 12.

Note that a completion of forming the turned-over circular flange portion 11'a-2 is done and perceivable at the time when the circular foot base 11'c of the turned-over circular flange portion (i.e. the circular neck portion stated above) contacts the edge 10aE of the connecting hole 10a of the link element 10, which blocks and inhibits the ongoing movement of the second punch 12'B into the cylindrical protruding portion. At that time, an entirety of the circular distal end 11'a-2E of the turned-over circular flange portion 11'a-2 is fully contacted on the outer surface 10f of the link element 10, without any noncontacted spot therebetween. In this regard, such full contact of circular distal end 11'a-2E with the link element's outer surface 10f should be properly adjusted to secure a smooth slidability of that link element's outer surface 10f on and along the circular distal end 11'a-2E in order to permit rotation of the link element 10 about the cylindrical region 11'aA.

Accordingly, the present third embodiment has the following structural aspects:
a) The lower end portion 10eL of the link element is rotatably sandwiched between the upper rail member D and the circular foot base 11'c of the turned-over circular flange portion. With this unique pivotal connection, the link element 10 is free to rotate relative to the cylindrical region 11'aA in forward and rearward directions as indicated in Fig. 12.
b) Moreover, an entirety of the circular distal end 11'a-2E of the turned-over circular flange portion 11'a-2 is fully and slidably contacted on the outer surface 10f of the link element 10 without any noncontacted spot therebetween, which ensures that the link element 10 is always stably supported by that circular distal end 11'a-2E against lateral dislocation, which is even true during rotation of the link element 10 about the cylindrical region.

Hence, similarly to the preceding first embodiment, the above-described link pivotal connection portion E-3 of the present third embodiment also has the effect that an entirety of the circular foot end 11' (the neck portion) of the turned-over circular flange portion 11'a-2 is fully and slidably contacted on and along the circular edge 10aE of the connecting hole 10a, which establishes a full circumferential contact between those circular foot end and circular edge. This arrangement accomplishes an extremely stable pivotal connection of the link element 10 to the upper rail D, which ensures that the link element 10 is stably rotatable about the cylindrical region 11'a-1 without being rattled there, and also prevented from being removed from the upper rail D. In addition thereto, the fact that an entirety of the circular distal end 11'a-2E of the turned-over circular flange portion 11' is fully and slidably contacted on the outer surface 10f of the link element 10, apparently leads to the effect that an entire circular localized area of the link element 10 surrounding the connecting hole 10a is fully and slidably supported by that circular distal end 11'a-2E, hence ensuring that rattling and wobbling of the link element 10 relative to the upper rail member is prevented. Therefore, the present third embodiment attains a highly stable rotation of the link element 10 about the cylindrical region 11'aA, in comparison with the first embodiment.

While not shown, in this third embodiment, an appropriate bush, similar to the synthetic resin bush 13 shown in Fig. 7 in the preceding second embodiment, may be used to facilitate the ease of rotation of the link element 10 about the cylindrical region. Specifically, though not shown in the drawings, a description will be made of a process for mounting the aforesaid bush to the turned-over circular flange portion in this third embodiment, on the basis of the bush mounting steps of the preceding second embodiment shown in Figs. 8 to 9. Namely, first of all, at a preliminary stage prior to forming the outwardly-divergent opening end region 11'a-1 by the second punch 12'A, suppose that an appropriate bush similar to the bush 13 is securely mounted on and about the cylindrical protruding portion, in substantially the same manner as described in the second embodiment and shown in Figs. 8 and 9. Then, after such mounting of the bush, the press-working device PD is operated to execute all the previously-described operations until the turned-over circular flange portion is formed, so that the bush is interposed among all the parts shown in Figs. 10 and 11. Any person skilled in the art can easily imagine such process and readily understand that, according to the present third embodiment, (i) the bush is interposed between the lower end portion 10eL of the link element 10 and the outer surface Da of the upper rail member; (ii) the bush is also interposed between the connecting hole 10a of the link element 10 and the cylindrical region 11'aA; (iii) the bush is further interposed between the circular foot base 11'c of the turned-over circular flange portion 11'a-2 and the edge 10aE of the connecting hole 10a; and (iv) the bush is still further interposed between the circular distal end 11'a-2 of the turned-over circular flange portion 11'a-2 and the outer surface 10f of the link element. It will therefore be understood that such interposition of the bush facilitates the ease and smoothness with which the link element 10 is rotated relative to the cylindrical region 11'aA.

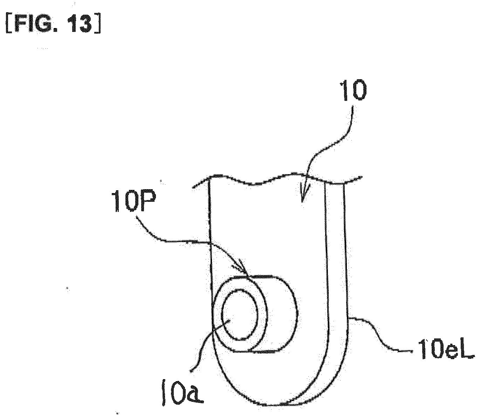

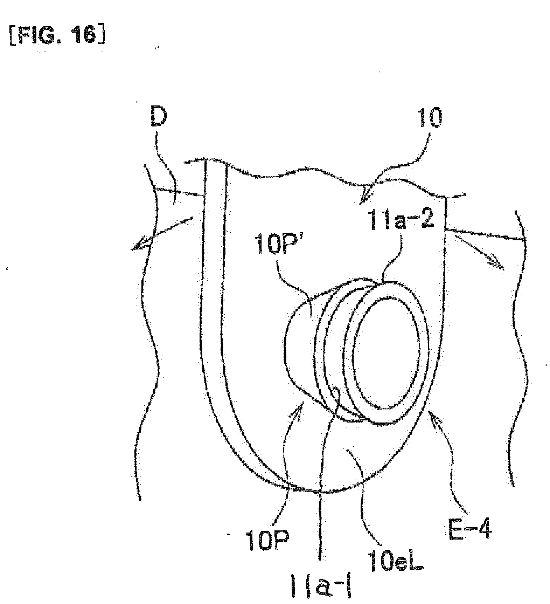

Figs. 13 to 17 illustrate a fourth embodiment of the present invention. In other words, a fourth embodiment of the previously-defined link embodiment E is shown in these Figures and generally indicated by the designation E-4. The fourth embodiment is basically identical to the preceding first embodiment, but different therefrom as to a link element used. Namely, a link element 10 shown in this embodiment has a cylindrical protruding portion 10P integrally provided to a connecting hole 10a of the link element. Briefly stated, according to the present embodiment, a resulting link pivotal connection portion E-4 shown in Fig. 16 may be constituted by using the aforesaid link element 10 that has the cylindrical protruding portion 10P and merely connecting such link element with the seat cushion side though the same steps as described in the first embodiment. It is noted that all like designations to be used hereinafter correspond to all like designations given in the first embodiment, and any further description is omitted with regard to all the parts and elements commonly used in both first and forth embodiments, for the sake of simplicity. Hereinafter, a description will be made of the link pivotal connection portion E-4 in this fourth embodiment.

In Fig. 13, one exemplary mode of the link element 10 is shown, in which the cylindrical protruding portion 10P noted above is formed in a lower end option 10eL of the link element. This is however not limiting. Instead thereof, the cylindrical protruding portion 10P may be formed in an upper end portion of the link element 10, in which case, the link pivotal connection portion E-4 shall be defined at the upper end portion of the link element 10 through a process to be described later in the present fourth embodiment.

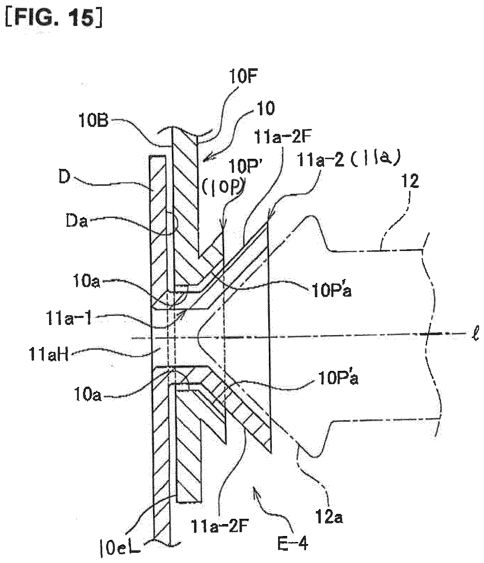

In this connection, to precisely construct the pivotal connection portion E-4 as shown in Figs. 15 and 16, it is important that the cylindrical protruding portion 10P should have a required small entire length relative to an entire length of the cylindrical region 11 a of the previously-stated cylindrical protruding portion, and also, an inner diameter of the cylindrical protruding portion 10P be slightly larger than an outer diameter of the aforesaid cylindrical portion 11 a. This construction assuredly permits smooth rotation of the link element 10 relative to the cylindrical region 11 a.

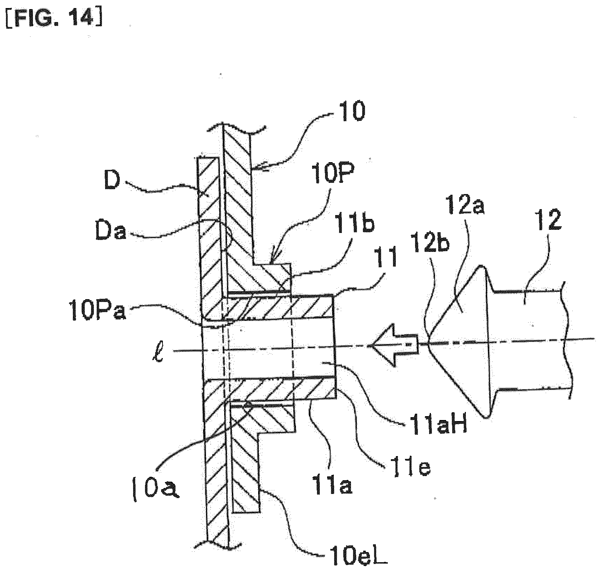

Referring to Figs. 13 and 14 in sequence, it will be understood that a process for forming the pivotal connection portion involves a first step of inserting the aforesaid cylindrical protruding portion 11 in and through the connecting hole 10a of the link element 10 as well as through the cylindrical protruding portion 10P formed in that link element 10. At this initial step, it can be understood in Fig. 14 that the inner circular surface 10Pa of the cylindrical protruding portion 10P of the link element 10 is in a slidable contact on and about the outer circumferential surface 11 b of the cylindrical protruding portion 11 of the upper rail member D. Thus, any person skilled in the art will understand that, at such initial stage, the lower end portion 10eL of the link element is in the state of being rotatably connected with the cylindrical protruding portion 11 and also being slidably contacted on the outer surface Da of the upper rail member D.

Next, a second step of the process is to finish both foregoing two cylindrical protruding portions in a configuration for preventing their removal from the upper rail member. For that second step, as shown in Fig. 14, a punch 12 is provided. In the same manner as described in the preceding first embodiment, a conical end portion 12a of the punch 12 is first pressed against the cylindrical protruding portion 11, thereby being set in a full contact with an entire circular distal end 11 e of the latter 11.

Then, under such state, the punch 12 is further forcibly pressed against that cylindrical protruding portion 11 towards the upper rail member D, to the extent that a predetermined area of the main body portion 11a of the cylindrical protruding portion 11 is deformed and extended by the conical end portion 12a of the punch 12 uniformly and equally in outward and radial directions due to its metallic ductility and transformed into the illustrative uniform outwardly-divergent shape. Concurrently, during such deformation of the cylindrical protruding portion 11 toward the upper rail member, a free end area of the cylindrical protruding portion 10P is thereby deformed and extended uniformly and equally in outward and radial directions due to its metallic ductility and transformed into the illustrative uniform outward-divergent shape. Consequently, as shown in Fig. 15, there is formed one predetermined outwardly-divergent opening end region 11 a-2 (hereinafter, a first outwardly-divergent opening end region 11 a-2) in the main body portion 11 a of the cylindrical protruding portion 11, whereas on the other hand, another predetermined outwardly-divergent opening end region 10P' (hereinafter, a second outwardly-divergent opening end region 10P') is formed in the cylindrical protruding portion 10P.

During the above-described step, the punch 12 stably moves toward the upper rail member D along a straight direction precisely, by the reason that the center (12b) of the punch is maintained to be precisely positioned on the central axis ℓ of the cylindrical protruding portion 11, as indicated in Figs. 14 and 15. Therefore, with such precise straight movement of the punch 12, each of the aforementioned two cylindrical protruding portions is caused to deform uniformly in outward direction, while being also extended uniformly in radial direction, with reference to the central axis ℓ, thereby being respectively transformed into the first and second outwardly-divergent opening end regions 11a-2 and 10P' each assuming a completely-uniform bellmouthed shape that diverges uniformly and equally in radial direction relative to the center thereof.

Owing to such uniform formation, as shown in Figs. 15 and 16, the second outwardly-divergent opening end region 10P' embracingly and fittingly overlies a predetermined entire surface area of the first outwardly-divergent opening end region 11 a-2, while being in a slidable contact therewith, whereby a full and precise contact is accomplished between the two opening end regions 10P' and 11a-2. Specifically, as best seen in Fig. 15, an entire inner truncated-conical surface 10P'a of the second outwardly-divergent opening end region 10P' of the link element 10 is slidably contacted on and about an outer truncated-conical surface 11a-2F of the first outwardly-divergent opening end region 11a-2, and further, an inner circular surface of the hole portion 10a of the link element 10 is slidably contacted on and about an outer circumferential surface of the cylindrical region 11a-1. By being so formed, the lower end portion 10eL of the link element is rotatably supported between the first outwardly-divergent opening end region 11a-2 and the upper rail member D in an extremely stable manner, so that the link element 10 per se is smoothly rotatable about the cylindrical region 11a-1, with great stability, in forward and rearward directions as indicated by the two arrows in Fig. 16. In that manner, the link pivotal connection portion E-4 is constituted.

The present embodiment of link pivotal connection portion E-4 features formation of the second outwardly-divergent opening end region 10P' as stated above. This is advantageous in greatly increasing a rate of contact area between the link element's lower end portion 10eL and the first outwardly-divergent opening end region 11a-2, as compared with the preceding first embodiment, because the second outwardly-divergent opening end region 10P' is at the entire inner truncated-conical surface thereof contacted with the outer truncated-conical surface of the first outwardly-divergent opening end region 11a-2, thus offering an extremely increased rate of contact area between the link element's lower end portion 10eL and the first outwardly-divergent opening end region 11a-2 in contrast to the first embodiment having no such increased contact arrangement. Hence, the extremely increased contact status of this fourth embodiment ensures that rattling and wobbling of the link element 10 at the upper rail and cylindrical region are completely prevented, which is even true during rotation of the link element 10 about the cylindrical region 11a-1, and further ensures that the lower end portion 10eL of the link element is completely prevented from its dislocation and removal from the upper rail D.

Also, according to this embodiment, merely pressing the punch against the cylindrical protruding portion as described above results in simultaneous formation of both first and second outwardly-divergent opening end regions 11a-2 and 10P' in uniform and precise manner relative to the concentric centers thereof, with an appropriate non-excessive pressure being applied thereto, which therefore quickly, automatically causes those two particular regions 11a-2 and 10P' to contact each other in a slidable way as well as in a fully contacted way precluding noncontacted spot therebetween, at one time. Thus, there is no such troublesome adjustment of contact as required in the conventional pivotal connection by rivet, and even in the present embodiment, a rapid and easy pivotal connection of the link element to the upper rail can be fully accomplished.

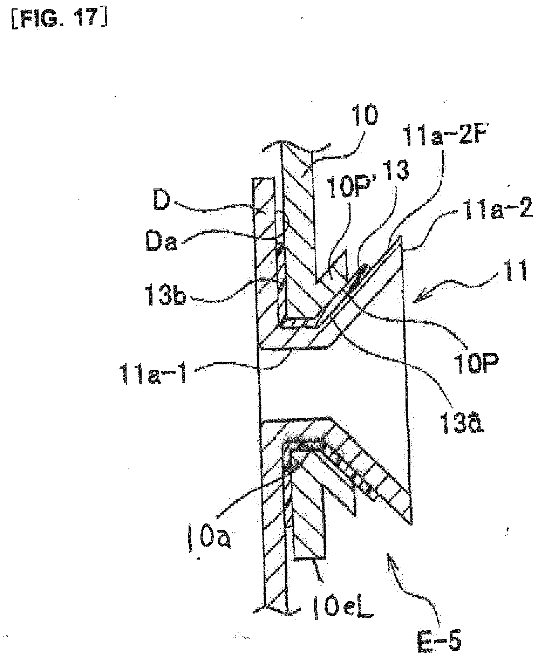

Fig. 17 shows a fifth alternative embodiment of the present invention wherein the bush 13 mentioned above is applied to the foregoing fourth embodiment. Namely, in accordance with the fifth embodiment, the synthetic resin bush 13, shown in Fig. 7, may be used to facilitate the ease of rotation of the link element 10 described in the fourth embodiment. In practice, although not shown, the bush 13 may be securely attached to the cylindrical protruding portion 11 through the previously-descried bush mounting steps of the preceding second embodiment, which are illustrated in Figs. 8 and 9. Subsequent thereto, the cylindrical protruding portion 11 with the bush 13 mounted thereon may be inserted in and through the hole portion 10a of the link element 10 and the inner bore of the cylindrical protruding portion 11, so that the cylindrical protruding portion 11 be set in position within the cylindrical protruding portion 11 of the link element 10. At this point, it is to be understood that the cylindrical portion 13e of the bush 13 is sandwiched between the cylindrical protruding portion 11 of the upper rail D and the cylindrical protruding portion 10P of the link element 10. Thereafter, an appropriate punch (not shown) be pressed against those two cylindrical protruding portions through the same steps and manners as previously described, so that the two cylindrical protruding portions are both deformed and extended uniformly in outward and radial directions and transformed into the first and second outwardly-divergent opening end regions 11a-2 and 10P', respectively, while the cylindrical portion 13a of the bush 13 is elastically deformed and extended therebetween and therealong in a uniform manner at the same time. Therefore, as seen in Fig. 17, the cylindrical portion 13a of the bush 13 assumes a uniform truncated-conical shape between the resulting two outwardly-divergent opening end regions 11a-2 and 10P, thus fully residing therebetween.

In this regard, after the first and second outwardly-divergent opening end regions 11a-2 and 10P' have been formed by the punch in the cylindrical protruding portion 11 and the link element 10, respectively, as stated above, it is to be appreciated that the bush 13 is immovably secured fast on and about both first outwardly-divergent opening end region 11a-2 and cylindrical region 11a-1, whereas on the other hand, the second outwardly-divergent opening end region 10P' is slidingly rotatable on and about an outer truncated-conical surface of the bush 13. With this bush arrangement, the link element 10 is smoothly rotatable relative to the cylindrical region 11a-1 forming a center of rotation of that link element, the cylindrical region 11a-1 adjoining with the first outwardly-divergent opening region 11a-2.

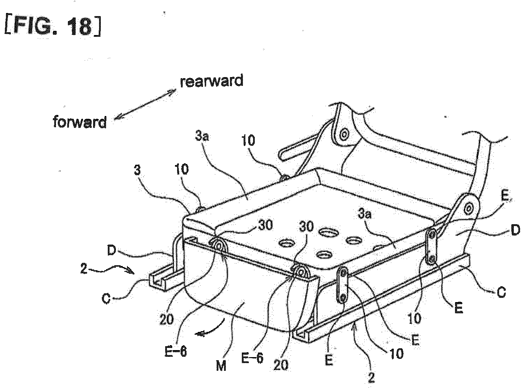

Fig. 18 shows a sixth alternative exemplary embodiment, according to which the above-described pivotal connection structure of the present invention is applied to a footrest device M provided to a forward side portion of the seat cushion frame 3. In this sixth embodiment, the footrest device M includes a pair of link elements 20 and 20 which are respectively, pivotally connected to a pair of connecting brackets 30 and 30 mounted to the forward side portion of the seat cushion frame 3. This pivotal connection of each link element 20 to the corresponding connecting bracket 30 is hereby generally defined as a conceptual link pivotal connection portion E, as shown. Such a link pivotal connection portion E of the footrest device M may be embodied by any selected one of all the preceding first to fifth embodiments, so that the same advantageous effects and actions of the selected embodiment are also attainable for the footrest device M.

While having described the present invention thus far, It should be understood that the present is not limited to the above-described embodiments, but various modifications and alterations may be effected thereto without departing from the scopes of the appended claims.

Description of the Reference Numerals
- 1 · · ·: motor vehicle eat
- 2 · · ·: slide rail device
- 3 · · ·: seat cushion frame
- 3a · · ·: side frame portion of the seat cushion frame
- 6 · · ·: seat back frame
- C · · ·: lower rail member
- D · · ·: upper rail member
- Da · · ·: outer surface of the upper rail member
- 10 · · ·: link element
- 10a · · ·: connecting hole of the link element
- 10aE · · ·: edge of the connecting hole of the link element
- 10eL · · ·: lower end portion of the link element
- 10eU · · ·: upper end portion of the link element
- 10f · · ·: outer surface of the link element
- 11 · · ·: cylindrical protruding portion
- 11a · · ·: main body of the cylindrical protruding portion
- 12 · · ·: punch
- 12e · · ·: conical end portion of the punch
- 12b · · ·: center of the punch
- E · · ·: generally-indicated conceptual link pivotal connection portion
- E-1 · · ·: link pivotal connection portion according to a first embodiment
- 11a-1 · · ·: cylindrical region
- 11a--2 · · ·: outwardly-divergent opening end region
- 11c · · ·: foot base (neck portion)
- E-2 · · ·: link pivotal connection portion according to a second embodiment
- 13 · · ·: bush made of a synthetic resin material
- 13a · · ·: main body portion of the synthetic resin bush
- 13b · · ·: flange portion of the synthetic resin bush
- E-3 · · ·: link pivotal connection portion according to a third embodiment
- 11' · · ·: cylindrical protruding portion
- 11'aH · · ·: hole of the cylindrical protruding portion
- 11'a · · ·: cylindrical region
- 11'a-1 · · ·: outwardly-divergent opening end region
- 12'A · · ·: first punch
- 12'Aa · · ·: conical end portion of the first punch
- 12'Ab · · ·: center of the first punch
- 11'aA · · ·: cylindrical region
- 11'a-2 · · ·: turned-over circular flange portion
- 11'a-2E · · ·: circular distal end of the turned-over circular flange portion
- 11'c · · ·: foot base (neck portion)
- PD · · ·: press-working device equipped with punch
- 12'B · · ·: second punch
- 12'Aa · · ·: conical end portion of the second punch
- 12'Ab · · ·: center of the second punch
- PDa · · ·: cavity of curved cross-section which is defined in the press-working device
- E-4 · · ·: link pivotal connection portion according to a fourth embodiment
- 11a-2 · · ·: first outwardly-divergent opening end region
- 11a-2F · ·: outer truncated-conical surface of the first outwardly-divergent opening end region
- 10P · · ·: cylindrical protruding portion of link element
- 10P' · · ·: second outwardly-divergent opening end region
- 10P'a · · ·: inner truncated-conical surface of the second outwardly-divergent opening end region
- E-5 · · ·: link pivotal connection portion according to a fifth embodiment
- 13 · · ·: bush made of a synthetic resin material
- 13a · · ·: main body portion of the synthetic resin bush
- 13b · · ·: flange portion of the synthetic resin bush
- E-6 · · ·: link pivotal connection portion according to a sixth embodiment
- M · · ·: footrest device
- 20 · · ·: link element
- 30 · · ·: connecting bracket

## Claims

1. A link structure in a motor vehicle seat, which includes a movable portion and a base portion retained stationary relative to said movable portion, wherein said movable portion is movable relative to said base portion and connected therewith via a link element,
said link structure being **characterized in that**:
said link element has a hole portion formed in an end portion thereof;
a pivotal connection portion is provided, at which said link element is at the hole portion thereof pivotally connected with one or each of said base and movable portions;
said pivotal connection portion includes: a cylindrical region; and an outwardly-divergent opening end region formed in a free end of said cylindrical region, said outwardly-divergent opening end region being so configured to become large radially in an outward direction from said cylindrical region;
said cylindrical region is formed integrally in one or each of said base and movable portions; and
said hole portion of said link element is rotatably supported on and about said cylindrical region, while said end portion of said link element is supportively sandwiched between said outwardly-divergent opening end region and one or each of said base and movable portions, so that said link element is ratable relative to said cylindrical region forming a center of rotation of the link element.

2. The link structure in a motor vehicle seat as described in claim 1, wherein said base portion comprises a floor of motor vehicle, and wherein said movable portion comprises a seat cushion frame provided in a seat cushion of the motor vehicle seat.

3. The link structure in a motor vehicle seat as described in claim 1, wherein said base portion comprises a seat cushion frame provided in a seat cushion of the motor vehicle seat, and wherein said movable portion comprises a footrest device.

4. The link structure in a motor vehicle seat as described in claim 1, wherein said outwardly-divergent opening end region is configured to open in a truncated-conical manner so as to become large radially in the outward direction in relation to a center of the outwardly-divergent opening end region, said center being located on a central axis of said cylindrical region.

5. The link structure in a motor vehicle seat as described in claim 1, wherein said cylindrical region and said outwardly-divergent opening end region are formed in said pivotal connection portion through the steps of: preforming a cylindrical protruding portion in one or each of said base and movable portions by a burring method; mounting said link element to said one or each of said base and movable portions by inserting said cylindrical protruding portion in and through said hole portion of the link element; and thereafter defining said cylindrical region and said outwardly-divergent opening end region in said cylindrical protruding portion.

6. The link structure in a motor vehicle seat as described in claim 5, wherein the step of defining said cylindrical region and said outwardly-divergent opening end region in said cylindrical protruding portion involves: using a punch having a conical end portion; and pressing said conical end portion of said punch forcibly against an outer opening end of said cylindrical protruding portion so as to define said cylindrical region and said outwardly-divergent opening end region in said cylindrical protruding portion.

7. The link structure in a motor vehicle seat as described in claim 1, wherein said base portion comprises a floor of motor vehicle, wherein said movable portion comprises a seat cushion frame provided in a seat cushion of the motor vehicle seat, wherein a slide rail element is fixedly provided on said floor of motor vehicle, said slide rail element comprising a lower rail member and an upper rail member slidably mounted on said lower rail member, and wherein said pivotal connection portion is provided to one or each of said seat cushion frame and said upper rail member.

8. The link structure in a motor vehicle seat as described in claim 1, wherein a bush made of a synthetic resin material is arranged so as to not only reside between said link element and one or each of said base and movable portions, but also reside between said pivotal connection portion and said hole portion of said link element.

9. The link structure in a motor vehicle seat as described in claim 1, wherein said outwardly-divergent opening end region is provided as a first outwardly-divergent opening end region, wherein said pivotal connection portion further includes a second outwardly-divergent opening end region which is formed in said link element so as to circumscribe said hole portion of the link element and extend outwardly therefrom in a radially enlarged manner, and wherein an inner surface of said second outwardly-divergent opening end region is slidably contacted on and about an outer surface of said first outwardly-divergent opening end region.

10. The link structure in a motor vehicle seat as described in claim 9, wherein a bush made of a synthetic resin material is arranged so as to not only reside between said link element and one or each of said base and movable portions, but also reside between said cylindrical region and said hole portion of said link element, and further reside between said inner surface of said second outwardly-divergent opening end region and said outer surface of said first outwardly-divergent opening end region.

11. A link structure in a motor vehicle seat, which includes a movable portion and a base portion retained stationary relative to said movable portion, wherein said movable portion is movable relative to said base portion and connected therewith via a link element,
said link structure being **characterized in that**:
said link element has a hole portion formed in an end portion thereof;
a pivotal connection portion is provided, at which said link element is at the hole portion thereof pivotally connected with one or each of said base and movable portions;
said pivotal connection portion includes: a cylindrical region; and a turned-over circular flange portion having a curved cross-section, said turned-over circular flange portion being formed in a free end of said cylindrical region and being so configured to become large radially therefrom in relation to a center of said hole portion of said link element and be turned over toward said link element in relation to said center;
said cylindrical region is formed integrally in one or each of said base and movable portions;
said turned-over circular flange portion has a circular distal end which is slidably contacted on a surface of said link element; and
said hole portion of said link element is rotatably supported on and about said cylindrical region, while said end portion of said link element is supportively sandwiched between said circular distal end and one or each of said base and movable portions, so that said link element is ratable relative to said cylindrical region forming a center of rotation of the link element.

12. The link structure in a motor vehicle seat as described in claim 11, wherein a bush made of a synthetic resin material is arranged so as to not only reside between said link element and one or each of said base and movable portions, but also reside between said pivotal connection portion and said hole portion of said link element.
